## Europäisches Patentamt
## European Patent Office
## Office européen des brevets

(19)

(11) Veröffentlichungsnummer: **0 191 831**
**B1**

(12) **EUROPÄISCHE PATENTSCHRIFT**

(45) Veröffentlichungstag der Patentschrift:
18.01.89

(51) Int. Cl.⁴: **G 02 C 7/02**

(21) Anmeldenummer: **85904223.6**

(22) Anmeldetag: **19.08.85**

(86) Internationale Anmeldenummer:
**PCT/DE 85/00278**

(87) Internationale Veröffentlichungsnummer:
**WO 86/01308 (27.02.86 Gazette 86/5)**

(54) **PROGRESSIVES BRILLENGLAS.**

(30) Priorität: **17.08.84 DE 3430334**

(43) Veröffentlichungstag der Anmeldung:
**27.08.86 Patentblatt 86/35**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**EP-A- 0 039 497**
**DE-A- 3 331 757**

(73) Patentinhaber: **Optische Werke G. Rodenstock,
Isartalstrasse 43, D-8000 München 5 (DE)**

(72) Erfinder: **BARTH, Rudolf, Sommerweg 1,
D-8061 Vierkirchen (DE)**

(74) Vertreter: **Steinmann, Otto C. et al, Kanzlei München,
Steinmann, Schiller Willibaldstrasse 36,
D-8000 München 21 (DE)**

# Beschreibung

Die Erfindung bezieht sich auf ein progressives Brillenglas gemäss dem Oberbegriff des Patentanspruchs 1.

## Stand der Technik

Progressive Brillengläser haben in ihrem oberen Bereich einen Fernteil und in ihrem unteren Teil einen Nahteil, zwischen denen ein Progressionsbereich vorgesehen ist, in dem die Wirkung von der Wirkung des Fernteils zu der Wirkung des Nahteils ansteigt. Idealerweise sollten sowohl der fernteil als auch der Nahteil möglichst gross sein und der Progressionsbereich ein ungestörtes Sehen für mittlere Entfernungen erlauben.

Um einen möglichst grossen Fernteil und einen möglichst grossen Nahteil zu erhalten, ist deshalb beispielsweise in der DD-B-71 210 vorgeschlagen worden, für den Fernteil und den Nahteil sphärische Flächen zu verwenden, zwischen denen sich ein vergleichsweise kurzer Progressionsbereich befindet. Ein derartiges progressives Brillenglas erlaubt zwar ein einigermassen ungestörtes Sehen in die Ferne und die Nähe, der Progressionsbereich ist aber aufgrund von Verzeichnungen im peripheren Bereich kaum zum deutlichen Sehen geeignet, so dass man derartige Brillengläser eigentlich als Zwei-Stärkengläser mit «verblendeter» Trennlinie ansehen muss. Mit diesen bekannten progressiven Brillengläsern erzielt man demnach lediglich eine kosmetische Verbesserung durch den Fortfall der Trennlinie bei Zwei-Stärkengläsern, nicht jedoch eine Verbesserung des Sehens im Zwischenbereich.

Andererseits ist eine Reihe von Vorschlägen gemacht worden, um einen für das deutliche Sehen geeigneten Progressionsbereich zu erhalten:

beispielsweise liegt den in der US-A-2 109 474, der US-A-2 878 721, der DE-B-2 044 639, der DE-C-2 336 708, der DE-A-2 439 127, der DE-A-3 016 935 und der DE-A-3 147 952 beschriebenen progressiven Brillengläsern folgendes gemeinsame Prinzip zugrunde:

Im oberen Teil des Progressionsbereichs und auch in einem Teil des eigentlich als Fernteil vorgesehenen Bereichs nimmt die Flächenbrechkraft von der Glasmitte zum Glasrand hin (im wesentlichen) zu, während sie im unteren Teil des Progressionsbereichs sowie im Nahteil von der Glasmitte zum Glasrand hin abnimmt. Im Randbereich ist demnach die Brechkraftzunahme wesentlich kleiner als auf dem Hauptmeridian, d.h. etwa in der Glasmitte; anders ausgedrückt verringern sich in den Randbereichen die Unterschiede zwischen Fernteil und Nahteil. Durch dieses Konstruktionsprinzip gelingt es, den störenden Astigmatismus weitgehend über die gesamte Fläche zu verteilen, wobei Spitzen in die unteren seitlichen Bereiche «abgedrängt» werden. Nachteilig ist aber der Wirkungsabfall im Nahteil in Horizontalrichtung bei gleichzeitigem starkem Astigmatismusanstieg. Beispielsweise beträgt die Breite des Nahteils — wenn man einen Wirkungsfall im Nahteil von 1 dpt zulässt — im Bereich des sogenannten Nahbezugspunktes nur noch ca. 15 mm. Damit ist es mit diesen bekannten Progressivgläsern nicht mehr möglich, beispielsweise eine Zeitungsseite voll zu überblicken, so dass zum Lesen Kopfbewegungen erforderlich sind. Darüberhinaus ist bei diesen bekannten Progressivgläsern der Teil des Progressionsbereichs, der zum deutlichen Sehen im Zwischenbereich geeignet ist, aufgrund des rasch ansteigenden Astigmatismus auf einige Millimeter verengt. Deshalb erfordern die bekannten Progressivgläser entweder einen entsprechend der Augenbewegung von der Ferne zur Nähe gewundenen Hauptmeridian oder sie müssen verschwenkt, d.h. mit einem um etwa 6 bis 10° gedrehten Hauptmeridian in die Brillenfassung eingebaut werden. Dies erfordert ein sehr genaues Einschleifen der Gläser in die Brillenfassung; wenn dieses Einschleifen nicht exakt erfolgt, oder sich der «Sitz» der Fassung ändert, kann es leicht zu Unverträglichkeiten der Gläser kommen.

Verschiedene Autoren — hierzu wird beispielsweise auf die US-A-2 878 721, Spalte 1, Zeile 55 f. verwiesen — haben die Vermutung geäussert, dass es aus prinzipiellen Gründen nicht möglich ist, Gläser des vorstehend diskutierten Typs weiter zu verbessern, da ein progressives Brillenglas mit einer progressiven Fläche zwangsläufig einen gewissen Astigmatismus haben muss.

Deshalb ist beispielsweise in der GB-A-876 798 vorgeschlagen worden, eine progressive Fläche zu verwenden, die auf der gesamten Fläche einen konstanten Astigmatismus hat. Als zweite Fläche wird eine nichtprogressive Fläche mit entgegengesetzt gleichem Astigmatismus verwendet, so dass sich (theoretisch) ein astigmatismusfreies Glas ergibt. Ein progressives Glas mit auf der gesamten progressiven Fläche konstantem Astigmatismus dürfte jedoch, wie auch das einzige Ausführungsbeispiel der GB-A-876 798 zeigt eine äusserst ungünstige Progressionsverteilung haben, die dazu führt, dass das Glas praktisch keinen Nahteil mit konstantem Flächenbrechwert aufweist.

Ein weiterer Vorschlag zur Überwindung des «Astigmatismusproblems» ist bereits 1953 in der GB-A-775 007 gemacht worden:

In der GB-A-775 007 wird ein progressives Brillenglas mit zwei asphärischen Flächen vorgeschlagen, von denen mindestens eine Fläche zum Wirkungsanstieg vom Fernteil über den Progressionsbereich zum Nahteil beiträgt. In dieser kaum in Einzelheiten gehenden Patentschrift ist über die Ausgestaltung der beiden asphärischen Flächen lediglich gesagt, dass mindestens eine von ihnen eine Drehfläche ist (Seite 1, Zeile 89 f.), und dass für jeden Flächenpunkt auf beiden Flächen die horizontale Krümmung grösser als die vertikale Krümmung ist (Seite 2, Zeile 10 f.).

Diese Bedingung für die horizontalen und die vertikalen Krümmungen in allen Flächenpunkten lässt darauf schliessen, dass der Autor der GB-A-775 007 das Konzept verfolgt, den Flächenastigmatismus beider Flächen hinsichtlich des Betrags möglichst gleichmässig über die jeweilige Fläche zu verteilen und für korrespondierende Durchblickpunkte auf der Vorderfläche und der Innenfläche möglichst entgegengesetzt gleich gross zu machen.

Von der Anmelderin dieser Patentanmeldung durchgeführte Untersuchungen haben jedoch gezeigt, dass sich mit einem derartigen Flächenkonzept — trotz der grösseren Freiheiten aufgrund der Verwendung zweier asphärischer Flächen — keine substantiellen Vorteile gegenüber Progressivgläsern erzielen lassen, bei denen lediglich eine Fläche asphärisch ausgebildet ist. Insbesondere können weder der Astigmatismus im Progressionsbereich noch der Wirkungsabfall im Nahteil wesentlich verringert werden.

Der Erfindung liegt die Aufgabe zugrunde, ein progressives Brillenglas der aus der GB-A-775 007 bekannten Gattung derart weiterzubilden, dass es einen breiten Progressionsbereich, in dem ein deutliches Sehen im Zwischenbereich möglich ist, und einen grossen Fernteil und einen grossen Nahteil mit praktisch konstanter Wirkung und geringem Astigmatismus aufweist.

Diese Aufgabe wird erfindungsgemäss durch die im kennzeichnenden Teil des Patentanspruchs 1 angegebenen Merkmale gelöst.

Die Erfindung geht von der Erkenntnis aus, dass eine progressive Fläche unvermeidlich einen gewissen Astigmatismus aufweisen muss. Dieser Astigmatismus kann entweder in bestimmten Teilen der Fläche weitgehend konzentriert oder einigermassen gleichmässig über die gesamte Fläche verteilt werden. Erfindungsgemäss ist nun erkannt worden, dass ein die vorstehend angegebene Aufgabe lösendes progressives Brillenglas weder dadurch erhalten wird, dass der Astigmatismus gleichmässig über die Fläche verteilt wird, noch dadurch, dass der Astigmatismus in die seitlichen unteren Randbereiche und damit in den Progressionsbereich abgedrängt wird, da in beiden Fällen der Astigmatismus in Verbindung mit der im Progressionsbereich erforderlichen Zunahme des Flächenbrechwerts den Progressionsbereich zu einem lediglich schmalen für das deutliche Sehen geeigneten Kanal verengt. Erfindungsgemäss ist vielmehr erkannt worden, dass es für ein die angegebene Aufgabe lösendes progressives Brillenglas erforderlich und möglich ist, den Hauptanteil des Flächenastigmatismus in einen Bereich zu verlagern, in dem die Wirkung praktisch nicht ansteigt. Hierdurch erhält man einen weitgehend asigmatismusfreien und vergleichsweise breiten Progressionsbereich, der ein deutliches Sehen im Zwischenbereich erlaubt. Darüberhinaus kann der Flächenastigmatismus in dem Bereich, in den er verlagert ist, und in dem sich die Wirkung praktisch nicht ändert, ohne weiteres durch den Astigmatismus der Gegenfläche kompensiert werden, da keine zusätzliche Bedingung für einen Wirkungsanstieg zu erfüllen ist. Damit erhält man ein Glas, dessen Fern- und Nahteil weitgehend astigmatismusfrei sind, und die eine weitgehend konstante Wirkung haben.

Die beiden Flächen des erfindungsgemässen Brillenglases können — abgesehen davon, dass sie so gestaltet sind, dass der Astigmatismus in einen bestimmten Bereich oder bestimmte Bereiche verschoben ist — einen ähnlichen Aufbau wie bekannte Gläser haben. Beispielsweise kann der Krümmungsradius der Schnittkurven, die durch den Schnitt der Fläche mit zum jeweiligen Hauptmeridian orthogonalen Ebenen entstehen, sich in dem Progressionsbereich monoton mit zunehmendem Abstand vom Hauptmeridian entsprechend der in der DE-B-2 044 639 angegebenen Regel ändern. Ferner können die einzelnen Flächen auch stückweise mit stetiger 2. Ableitung zusammengesetzt sein. Auch können Flächeneigenschaften vorgegeben und die Flächen dann mit Spline-Funktionen berechnet werden.

Die Berechnung der Flächen kann in an sich bekannter Weise erfolgen, wobei vorteilhafter Weise zunächst der Progressionsbereich optimiert wird, ohne dass die Flächeneigenschaften des Fernteils und/oder des Nahteils berücksichtigt werden. Die Optimierung des Fernteils und/oder des Nahteils hinsichtlich Wirkung und Astigmatismus erfolgt dann mittels der Gegenfläche.

Besonders vorteilhaft sowohl hinsichtlich der Flächeneigenschaften als auch hinsichtlich der Einfachheit der Berechnung ist es jedoch, mindestens eine der Flächen mit periodischen Funktionen aufzubauen, wie sie in der DE-A-2 814 916 angegeben sind (Anspruch 8). Auf diese Druckschrift wird im übrigen hinsichtlich aller hier nicht im einzelnen erläuterten Begriffe und Rechenverfahren ausdrücklich Bezug genommen.

Das erfindungsgemässe progressive Brillenglas kann darüberhinaus ohne weiteres so gestaltet werden, dass in dem Progressionsbereich die Linien konstanter Wirkung weitgehend horizontal verlaufen. Zu den Vorteilen dieses Verlaufs der Linien konstanter Wirkung bei einem Glas mit zwei progressiven Flächen bzw. der Linien konstanten Flächenbrechwerts wird auf die DE-B-2 610 203 verwiesen.

Darüberhinaus hat das erfindungsgemässe progressive Brillenglas den überraschenden Vorteil, dass die Verzeichnung gering ist.

Der erfindungsgemässe Grundgedanke, den störenden Flächenastigmatismus in einen Bereich zu verlagern, in dem die Wirkung nicht ansteigt, lässt eine weitestgehende gestalterische Freiheit zu.

Das erfindungsgemässe Brillenglas kann in an sich bekannter Weise Flächen aufweisen, deren Hauptmeridiane als Nabelpunktlinie ausgebildet oder auf denen wenigstens teilweise Astigmatismus vorhanden ist, der allerdings durch den Astigmatismus der Gegenfläche kompensiert wird.

Die Hauptmeridiane können gewunden sein, d.h. die Hauptmeridiankurven liegen nicht in einer Ebene; die Hauptmeridiankurven können aber auch eben sein, und das Glas verschwenkt in eine Brillenfassung eingbaut werden.

Natürlich ist es auch möglich, das erfindungsgemässe Brillenglas, das mit einem gewundenen Hauptmeridian versehen ist, oder das verschwenkt in eine Brillenfassung eingeschliffen werden soll, so zu berechnen, dass es in der Einbaulage horizontalsymmetrisch ist.

Besonders vorteilhaft ist es jedoch, dass der grosse, nahezu astigmatismusfreie Fernteil und der grosse nahezu astigmatismusfreie Nahteil sowie der breite Progressionsbereich, in dem ein deutliches Sehen möglich ist, es auch erlauben, das Glas ohne Verschwenkung in die Brillenfassung einzubauen, ohne das sich physiologische Beeinträchtigungen ergeben würden.

Damit erhält man ohne grossen Aufwand bei der Berechnung ein horizontalsymmetrisches Glas, das bei einem verschwenkten Einbau oder bei einem gewundenen Hauptmeridian nur mit grossen Aufwand zu berechnen ist, und darüberhinaus auch die Fertigung von sogenannten «linken» und «rechten» Gläsern notwendig macht.

Weiterbildungen der Erfindung sind in den Unteransprüchen angegeben.

Gemäss Anspruch 2 trägt nur eine Fläche zum Wirkungsanstieg bei, die andere Fläche dient lediglich zur Kompensation des Flächenastigmatismus in dem Bereich, in den der Flächenastigmatismus verlagert ist.

Besonders vorteilhaft ist es, wenn gemäss Anspruch 3 der Bereich, in den der Wirkungsanstieg verlagert ist, der Fernteil ist. Dies erlaubt zum Beispiel, wenn die beiden Flächen im Bereich des Fernteils im wesentlichen übereinstimmenden Aufbau haben, einen praktisch vollständig astigmatismusfreien Fernteil zu realisiern, der afokal ist; das Glas ist damit für sogenannte rechtsichtige Presbyopen geeignet (Anspruch 8).

Im Anspruch 6 ist beansprucht, dass der restliche Teil der Fläche sphärisch oder torisch ausgebildet ist, wodurch sich ein einfach herzustellender Flächenaufbau ergibt.

Der sphärische oder torische Bereich der Fläche ohne Wirkungsanstieg kann mit dem Bereich, in den der Astigmatismus verlagert ist, mittels eines Übergangsbereichs (Anspruch 4) oder diskontinuierlich, d.h. mit einem «Sprung» bzw. einer «Kante» verbunden sein.

Bei einem kontinuierlichen Übergangsbereich, dessen Höhe beispielsweise einige Millimeter beträgt, erhält man einen kontinuierlichen Progressionsanstieg vom Fernteil zum Nahteil. Eine diskontinuierliche Verbindung erlaubt es dagegen — wenn man einen Sprung in der Wirkung in Kauf nimmt — durch die Flächenbrechkraft der sphärischen bzw. torischen Fläche den Wirkungsanstieg des progressiven Brillenglases, d.h. die Addition festzulegen. Beispielsweise erhält man — wenn die progressive Fläche die Vorderfläche ist — mit einer Fernteil-Flächenbrechkraft von 5,56 dpt und einer Nahteil Flächenbrechkraft von 7,56 dpt bei einer Flächenbrechkraft des sphärischen Flächenteils der Rückfläche von 5,56 dpt eine Addition von 2,0 dpt, während eine Flächenbrechkraft der Rückfläche von −6,56 eine Addition von 1,0 und eine Flächenbrechkraft von −4,56 eine Addition von 3,0 ergibt. Die geringfügige physiologische Beeinträchtigung durch den «Sprung» der Flächenbrechkraft an der Übergangslinie zwischen dem zur Kompensation des Flächenastigmatismus ausgebildeten Teil der Rückfläche und dem sphärischen Teil wird von den meisten Trägern des progressiven Brillenglases nicht als störend empfunden.

Eine Anpassung eines Brillenglases gemäss Anspruch 8, dessen Vorderfläche und Innenfläche einen Fernteil ohne optische Wirkung ergeben, an bestimmte Rezeptwerte, d.h. an bestimmte optische Wirkungen zur Korrektur von Augenfehlern für die Fernsicht ist ohne weiteres dadurch möglich, dass gemäss Anspruch 9 an dem progressiven Brillenglas eine weitere Linse angebracht wird, die gemäss Anspruch 10 bevorzugt an der Innenfläche des progressiven Brillenglases angebracht wird. Diese weitere Linse hat einen anderen Brechungsindex als der Brechungsindex des progressiven Brillenglases. Natürlich ist es erforderlich, die Fläche des progressiven Brillenglases, an der die Hilfslinse angebracht ist, «Gegen die weitere Linse zu rechnen», und gegebenenfalls den Aufbau der Fläche so zu ändern, dass die vorstehend gekennzeichneten Korrekturprinzipien erhalten bleiben.

Die weitere Linse kann beispielsweise angeschmolzen oder angekittet werden. Vorteilhafterweise wird die Fläche des progressiven Brillenglases so gestaltet, dass sich die Hilfslinse bei dem Verschmelzen der beiden Linsen auf die Fläche des progressiven Brillenglases absenkt, so dass die Bearbeitung der Hilfslinse vor der Verbindung mit dem progressiven Brillenglas vereinfacht wird.

Das Anbringen einer weiteren Linse an einem progressiven Brillenglas ist im übrigen bekannt; hierzu wird auf den Artikel «Clinical experience of varifocal spectacle lenses» von Colin Fowler in «The Optician», Juli 1982 verwiesen.

Die Erfindung wird nachstehend anhand eines Ausführungsbeispiels unter Bezugnahme auf die Zeichnung näher beschrieben, in der zeigen:

Fig. 1 einen Schnitt durch ein Ausführungsbeispiel eines progressiven Brillenglases,

Fig. 2 tabellarisch die Pfeilhöhen und Horizontal-Krümmungsradien der Vorderfläche eines ersten Ausführungsbeispiels der Erfindung,

Fig. 3 den Verlauf des Hauptmeridians des Ausführungsbeispiels gemäss Fig. 2,

Fig. 4 Linien gleichen Flächenastigmatismus für die Vorderfläche des Ausführungsbeispiels gemäss Fig. 2,

Fig. 5 Linien gleichen Astigmatismus eines progressiven Brillenglases, bei dem die Vorderfläche gemäss Fig. 2 verwendet wird,

Fig. 6 die Wirkungslinien des Brillenglases gemäss Fig. 5, und

Fig. 7 einen Schnitt durch ein zweites Ausführungsbeispiel der Erfindung, bei dem zum Erzielen einer definierten Wirkung eine zweite Linse angeschmolzen ist.

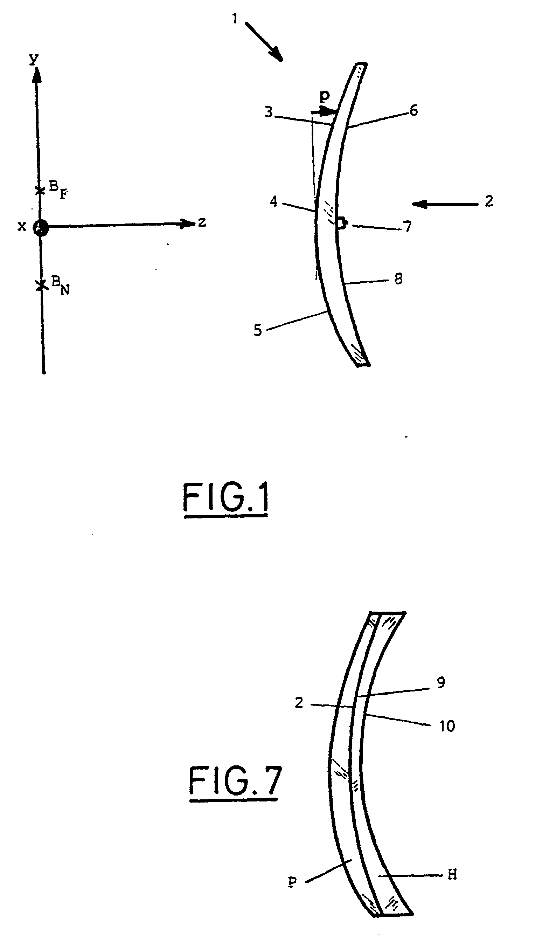

Fig. 1 zeigt zur Erläuterung des prinzipiellen Aufbaus eines erfindungsgemässen progressiven Brillenglases einen Längsschnitt durch ein derartiges Glas. Das erfindungsgemässe Brillenglas weist eine konvexe asphärische Vorderfläche 1 und eine konkave asphärische Innenfläche 2 auf. Die Vorderfläche 1 ist eine progressive Fläche, d.h. ihre Flächenbrechkraft nimmt vom Fernteil 3 über einen Progressionsbereich 4 zum Nahteil 5 hin zu. Die Innenfläche 2 trägt nicht zum Wirkungsanstieg bei. Im oberen Bereich, d.h. in dem dem Fernteil 3 der Vorderfläche 1 gegenüberliegenden Teil 6 ist die Innenfäche 2 so ausgebildet, dass ihr Flächenastigmatismus den Flächenastigmatismus der Vorderfläche 1 in diesem Bereich kompensiert. An den Flächenteil 6 schliesst sich ein schmaler Übergangsbereich 7 an, durch den die Innenfläche kontinuierlich vom Teil 6 in einen sphärisch ausgebildeten Teil 8 übergeht.

Ferner ist in Fig. 1 die Lage des im folgenden verwendeten kartesischen Koordinatensystems mit den Achsen x, y und z sowie die Pfeilhöhe $p_z = p(x,y)$

eingezeichnet, die zur Beschreibung der Flächen verwendet wird.

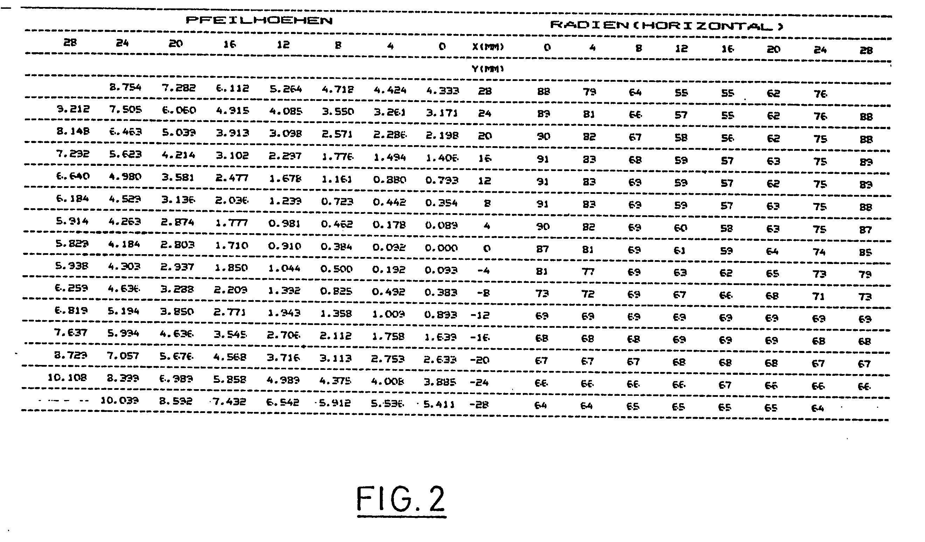

Im folgenden soll ein numerisches Ausführungsbeispiel der Erfindung in Verbindung mit den Fig. 2 bis 7 vorgestellt werden.

Das Ausführungsbeispiel gemäss diesen Figuren weist eine progressive Vorderfläche 1 auf, deren Flächenbrechkraft auf dem Hauptmeridian von 5,56 dpt auf 7,56 dpt ansteigt, d.h. die sog. Addition A beträgt 2,0 dpt. Die Innenfläche 2 hat auf ihrem «Hauptmeridian» eine konstante Flächenbrechkraft von −5,56 dpt. Die Berechnung dieses Ausführungsbeispiels ist mit dem in der DE-A-2 814 916 angegebenen Formelsatz vorgenommen worden. Der bei der Berechnung zugrundegelegte Brechungsindex ist 1,525.

Fig. 2 zeigt eine Tabelle, in deren linkem Teil die Pfeilhöhen p (s. Fig. 1) für Flächenpunkte (x, y) der Vordefläche 1 dieses Ausführungsbeispiels angegeben sind. Im rechten Teil der Tabelle sind für diese Flächenpunkte die Horizontal-Krümmungsradien angegeben, d.h. die Krümmungsradien der Schnittlinien, die sich durch den Schnitt von zur x/z-Ebene parallelen Ebene mit der progressiven Vorderfläche 1 ergeben (beide Flächen sind symmetrisch zu x = 0).

Bei dem gezeigten Ausführungsbeispiel ist der Hauptmeridian der Vorderfläche 1 eben und liegt in der Glasmitte (x = 0). Ferner ist der Hauptmeridian eine Nabelpunktlinie.

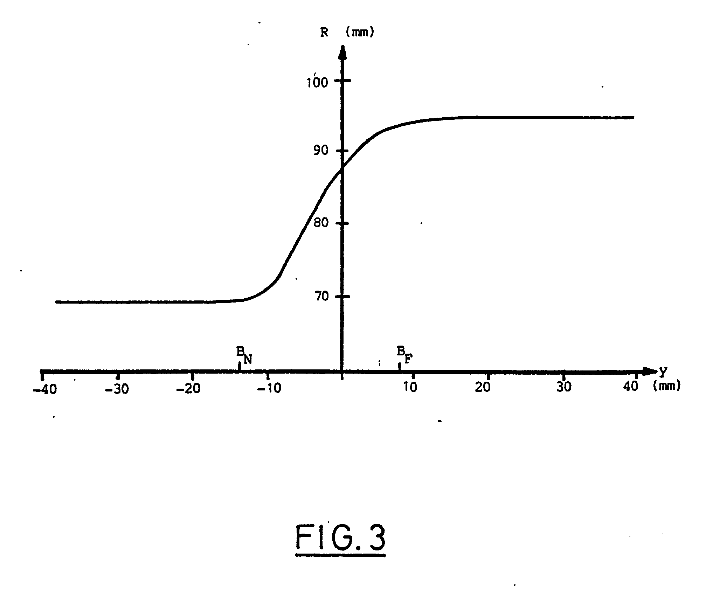

Fig. 3 zeigt die Abhängigkeit des Krümmungsradius R des Hauptmeridians von y für das dargestellte Ausführungsbeispiel. Wie man sieht, ist die Flächenbrechkraft auf dem Hauptmeridian im Fernteil und im Nahteil nahezu konstant, und nimmt im Progressionsbereich weitgehend linear vom Wert des Fernteils auf den Wert des Nahteils zu.

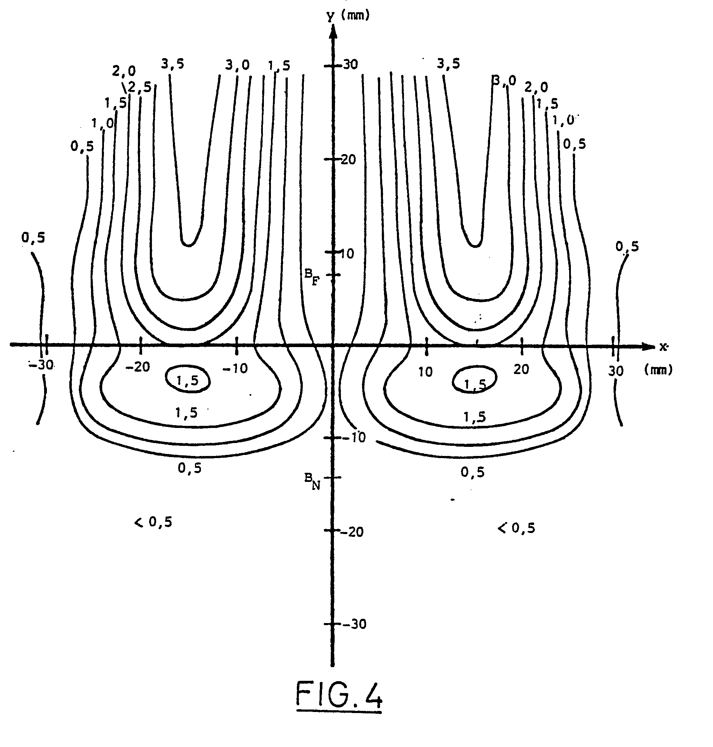

Fig. 4 zeigt den Flächenastigmatismus der Vorderfläche 1 gemäss Fig. 2. Wie man sieht, ist der Flächenastigmatismus insbesondere im Fernteil ausserhalb des Hauptmeridians sehr gross. In dem etwa von y = +6 bis y = −14 mm reichenden Progressionsbereich ist der Flächenastigmatismus vergleichsweise klein und im grossen Nahteil sehr gering, d.h. kleiner als 0,5 dpt.

Mit $B_F$ und $B_N$ sind in den Fig. 4 bis 6 der Fern- bzw. der Nahbezugspunkt nach DIN 58208 bezeichnet.

Bei dem gezeigten Ausführungsbeispiel ist die Innenfläche 2 in ihrem Teil 6 (mit den Koordinaten y > 0) gleich wie der Fernteil 3 der Vorderfläche 1 aufgebaut. Damit ist gemeint, dass die Hauptkrümmungsradien in jedem Punkt der konkaven Rückfläche gleich den Hauptkrümmungsradien des entsprechenden Punktes der konvexen Vorderfläche sind. Damit hat die Innenfläche in ihrem Teil 6 einen Flächenastigmatismus, der entgegengesetzt gleich dem Flächenastigmatismus der Vorderfläche im Bereich des Fernteils 3 ist.

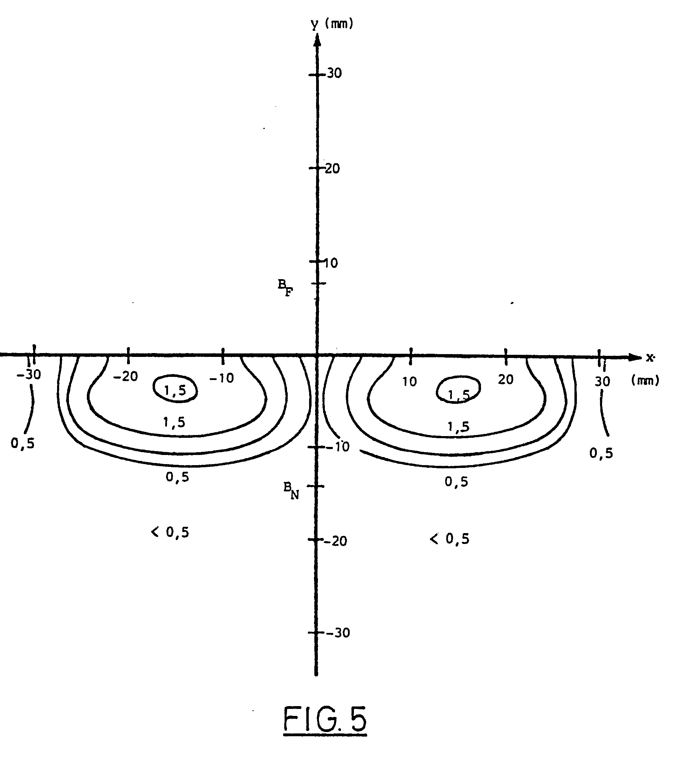

Hierdurch ergibt sich der in Fig. 5 dargestellte Gesamtastigmatismus des erfindungsgemässen progressiven Brillenglases. Wie Fig. 5 zeigt, sind der Fernteil und der Nahteil des progressiven Brillenglases weitgehend astigmatismusfrei d.h. der Gesamtastigmatismus ist kleiner als 0,5 dpt. Im Progressionsbereich ist zwar noch ein gewisser Restastigmatismus vorhanden; der Teil der Progressionszone, in dem längs des Hauptmeridians der Astigmatismus kleiner als 1 dpt ist, ist jedoch mit ca. 8 mm vergleichsweise breit.

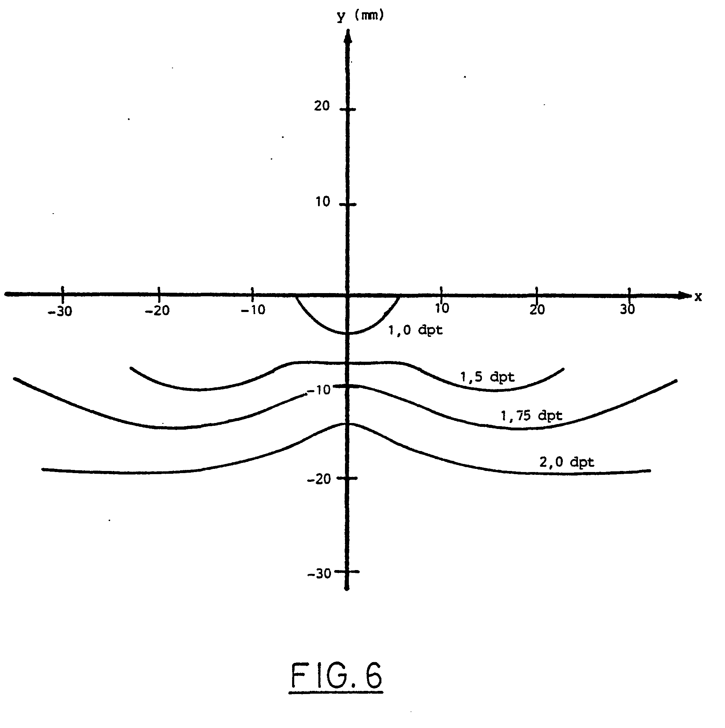

Darüberhinaus ist der Verlauf der Wirkungslinien — wie Fig. 6 zeigt — sehr günstig, da diese insbesondere im Bereich des Hauptmeridians nahezu horizontal verlaufen.

Dadurch, dass im Bereich des Fernteils die Hauptkrümmungsradien entsprechender Flächenpunkte der Vorderfläche 1 und der Innenfläche 2 entgegengesetzt gleich sind, ist der Fernteil des progressiven Brillenglases ohne optische Wirkung, anders ausgedrückt, ist der Fernteil afokal.

Fig. 7 zeigt eine Möglichkeit, ein progressives Brillenglas, dessen Vorderfläche 1 und dessen Innenfläche 2 einen Fernteil ohne optische Wirkung ergeben, an bestimmte Rezeptwerke, d.h. an bestimmte optische Wirkungen zur Korrektur von Augenfehlern bei der Fernsicht anzupassen. Hierzu wird eine weitere Linse bzw. eine Hilfslinse H mit Flächen 9 und 10 (beispielsweise mit ihrer Fläche 9) an der Innenfläche 2 des progressiven Brillenglases P angebracht. Die Hilfslinse H hat einen anderen, vorzugsweise kleineren Brechungsindex als das progressive Brillenglas P. Natürlich ist es erforderlich, die Fläche des progressiven Brillenglases P, an die die Hilfslinse H angebracht ist, «nicht gegen Luft, sondern gegen das Material der Hilfslinse zu rechnen». Die Hilfslinse kann dabei beispielsweise angeschmolzen oder angekittet werden. Vorteilhafterweise wird die Fläche des progressiven Brillenglases P so gestaltet, dass sich die Hilfslinse beim Verschmelzen der beiden Linsen auf die Fläche des progressiven Brillenglases absenkt, so dass die Bearbeitung der Hilfslinse vor der Verbindung mit dem progressiven Brillenglas vereinfacht wird.

Den gewünschten Rezeptwert dieses «Verbundglases» erhält man in bekannter Weise durch eine entsprechende Gestaltung der «freien Fläche» der Hilfslinse, bei dem in Fig. 7 gezeigten Ausführungsbeispiel also der Fläche 10 der Hilfslinse H.

Vorstehend ist ein Ausführungsbeispiel der Erfindung beschrieben worden. Bei dem gezeigten Ausführungsbeispiel sind in dem Bereich des Fernteils die Vorderfläche und die Innenfläche übereinstimmend aufgebaut, d.h. entsprechende Flächenpunkte haben Hauptkrümmungsradien, deren Absolutbetrag gleich dem Absolutbetrag des entsprechenden Hauptkrümmungsradius des anderen Flächenpunktes ist. Hierdurch ist der Fernteil afokal, d.h. er hat keine optische Wirkung. Es ist natürlich jederzeit möglich, die Innenfläche 2 im Bereich des Fernteils anders als die Vorderfläche 1 zu gestalten, so dass der Fernteil eine gewünschte optische Wirkung aufweist. Dabei kann es ohne weiteres in Kauf genommen werden, dass der Flächenastigmatismus der beiden Flächen sich nicht vollständig in den Randbereichen des Brillenglases kompensiert.

Ferner ist bei dem gezeigten Ausführungsbeispiel der Übergangsbereich 7 der Innenfläche 2 kontinuierlich ausgebildet. Es ist jedoch ohne weiteres möglich, diesen Übergangsbereich diskontinuierlich auszubilden. Durch entsprechend gewählte sphärische oder torische Flächenteile 8 lässt sich dann bei gleichbleibender Vorderfläche eine gewünschte Addition erzielen.

Auch ist es möglich, statt der Vorderfläche auch die Innenfläche oder beide Flächen progressiv auszubilden.

Die Hauptmeridiane beider Flächen können eben oder gewunden sein; anstelle einer Nabelpunktlinie als Hauptmeridian kann auch eine Linie verwendet werden, die wenigstens teilweise einen definierten Astigmatismus aufweist; wenn beide Flächen zum Wirkungsanstieg beitragen, d.h. progressiv ausgebildet sind, kann auch eine Fläche eine Nabelpunktlinie als Hauptmeridian aufweisen, während der Hauptmeridian der anderen Fläche einen definierten Astigmatismus aufweist.

Selbstverständlichen kann der Verlauf des oder der Hauptmeridiane von dem in Fig. 3 gezeigten abweichen: Beispielsweise ist es möglich, einen Hauptmeridian zu verwenden, dessen Krümmungsverlauf Extremwerte zeigt, in denen senkrecht zum Hauptmeridian Nabelpunktlinien verlaufen.

Eine an einer der beiden Flächen des progressiven Brillenglases angebrachte weitere Linse (Hilfslinse) kann zusätzlich oder ausschliesslich auch zur Korrektur von Abbildungsfehlern des progressiven Brillenglases, wie des Astigmatismus, der Verzeichnung und/oder des Brechwertfehlers dienen.

Das erfindungsgemässe Brillenglas kann aus den üblichen bei der Herstellung von Brillengläsern verwendeten Materialien, wie Silikatgläsern, Kunststoffmaterialien usw. hergestellt werden. Ferner ist es möglich, das Glas mit einem zusätzlichen Brechungsindexgradienten zu versehen.

Die Herstellung des erfindungsgemässen progressiven Brillenglases kann in bekannter Weise erfolgen, so dass hierauf nicht näher eingegangen werden muss.

## Patentansprüche

1. Progressives Brillenglas mit konvexer asphärischer Vorderfläche (1) und konkaver asphärischer Innenfläche (2), von denen mindestens eine Fläche zum Wirkungsanstieg vom Fernteil (3) über die Progressionszone (4) zum Nahteil (5) beiträgt, dadurch gekennzeichnet, dass die zum Wirkungsanstieg beitragende Fläche (1) oder Flächen so ausgebildet sind, dass der Hauptanteil des Astigmastismus in einen Bereich (3 bzw. 5) verlagert ist, in dem die Wirkung praktisch nicht ansteigt, und dass der Flächenastigmatismus der beiden Flächen (1, 2) sich in diesen Bereichen (3, 6 bzw. 5, 8) im wesentlichen kompensiert.

2. Brillenglas nach Anspruch 1, dadurch gekennzeichnet, dass nur eine Fläche (1) zum Wirkungsanstieg beiträgt.

3. Brillenglas nach einem der Ansprüche 1 bis 2, dadurch gekennzeichnet, dass der Bereich, in den der Flächenastigmatismus verlagert ist, der Fernteil (3) ist.

4. Brillenglas nach einem der Ansprüche 1 bis 3, dadurch gekennzeichnet, dass die nicht zum Wirkungsanstieg beitragende Fläche (2) einen kontinuierlichen Übergangsbereich (7) zwischen dem Bereich (6), in den der Astigmatismus verlagert ist, und den restlichen Flächenteilen (8) aufweist.

5. Brillenglas nach einem der Ansprüche 1 bis 3, dadurch gekennzeichnet, dass der Übergang von dem Bereich (6) der nicht zum Wirkungsanstieg beitragenden Fläche (2), in den der Astigmatismus verlagert ist, zu den restlichen Flächenteilen (8) diskontinuierlich ist.

6. Brillenglas nach einem der Ansprüche 1 bis 5, dadurch gekennzeichnet, dass die nicht zum Wirkungsanstieg beitragende Fläche (2) mit Ausnahme des zum Fernteil (3) gehörigen Bereichs (6) und eines sich daran anschliessenden Übergangsbereichs (7) sphärisch oder torisch ausgebildet ist.

7. Brillenglas nach einem der Ansprüche 1 bis 6, dadurch gekennzeichnet, dass mindestens eine der beiden Flächen (1,2) in einem Zylinderkoordinatensystem (y, ρ, φ) folgender Gleichung genügt:

$$\rho(\varphi,y) = \sum_{n=0}^{\infty} a_n(y) * \cos(n\,k(y)\varphi)$$

in der die $a_n(y)$ so gewählt sind, dass
φ (o,y) die Kurve f(y) des Hauptmeridians beschreibt, k(y) eine vom Nahteil (5) zum Fernteil (3) monoton — vorzugsweise im Bereich von 3 bis 10 — ansteigende Funktion oder eine über die ganze Fläche konstante — vorzugsweise im Bereich von 3 bis 10 liegende — Zahl ist, und der Krümmungsverlauf $F(y) = f''(y)/(1+f'^2(y))^{3/2}$ des Hauptmeridians der Gleichung

$$F(y) = A\,(1-(1+e^{-c(y+d)})-m$$

genügt mit $A = \overline{D}_N - \overline{D}_F$, wobei $\overline{D}_N$ und $\overline{D}_F$ der mittlere Flächenbrechwert im Nahteil (5, 8) bzw. Fernteil (3, 6) ist.

8. Brillenglas nach einem der Ansprüche 1 bis 6, dadurch gekennzeichnet, dass das Glas im Bereich des Fernteils (3, 6) praktisch keine optische Wirkung hat.

9. Brillenglas nach einem der Ansprüche 1 bis 8, dadurch gekennzeichnet, dass an einer Fläche (2) eine weitere Linse (H) angebracht ist, deren gegen Luft gerichtete Fläche (10) sphärisch oder torisch gestaltet ist, und deren Brechungsindex sich von dem des progressiven Brillenglases (P) unterscheidet.

10. Brillenglas nach Anspruch 9, dadurch gekennzeichnet, dass das progressive Brillenglas im Bereich des Fernteils (3, 6) praktisch keine optische Wirkung hat, und die gewünschte optische Wirkung (Rezeptwert) im Fernteil (3,6) durch die an der Innenfläche (2) des progressiven Brillenglases (P) angebrachte zweite Linse (H) erzielt wird.

## Claims

1. A progressive spectacle lens with a convex, aspherical front surface (1) and a concave, aspherical back surface (2), of which at least one surface contributes to the power increase from the distance portion (3) over the progression zone (4) to the reading portion (5), characterised by the fact that the surface (1) or the surfaces contributing to the power increase are designed in such a way that the main portion of astigmatism is transposed into an area (3 resp. 5) in which the power practically does not increase and that the surface astigmatism of the two surfaces (1, 2) essentially cancel each other out in these areas (3, 6 resp. 5, 8).

2. A spectacle lens according to claim 1, characterised by the fact that only one surface (1) contributes to the power increase.

3. A spectacle lens according to any of the claims 1 to 2, characterised by the fact that the area into which the surface astigmatism has been transposed is the distance portion (3).

4. A spectacle lens according to any of the claims 1 to 3, characterised by the fact that that surface (2) which does not contribute to the power increase has a continuous transition area (7) between the area (6), into which the astigmatism has been transposed, and the remaining surface parts (8).

5. A spectacle lens according to any of the claims 1 to 3, characterised by the fact that the transition from the area (6) of the surface (2) not contributing to the power increase, into which the astigmatism has been transposed, is discontinuous to the remaining surface parts (8).

6. A spectacle lens according to any of the claims 1 to 5, characterised ty the fact that with the exception of the area (6) belonging to the distance portion (3) and a transition area (7) connected thereto, the surface (2) not contributing to the power increase has a spherical or toric design.

7. A spectacle lens according to any of the claims 1 to 6, characterised by the fact that at least one of the two surfaces (1, 2) satisfies the following equation in a cylinder coordinate system (y, ρ, φ):

$$\rho(\varphi, y) = \sum_{n=0}^{\infty} a_n(y) * \cos(n\, k(y)\varphi)$$

where $a_n(y)$ have been selected in such a way that $\varphi(o,y)$ describes the curve f(y) of the main meridian,
k(y) is a function which increases monotonously from the reading portion (5) to the distance portion (3) — preferably in the area from 3 to 10 — or a number constant over the whole surface — preferably in the area from 3 to 10, and where the curvature $F(y) = f''(y)/(1+f'^2(y))^{3/2}$ of the main meridian satisfies the equation

$$F(y) = A\,(1-(1+e^{-c(y+d)})-m$$

with $A = \overline{D}_N - \overline{D}_F$, where $\overline{D}_N$ and $\overline{D}_F$ are respectively the mean surface focal power in the reading portion (5,8) or the distance portion (3,6).

8. A spectacle lens according to any of the claims 1 to 6, characterised by the fact that the lens has practically no optical power in the area of the distance portion (3,6).

9. A spectacle lens according to any of the claims 1 to 8, characterised by the fact that another lens (H) is affixed to a surface (2), where the surface (10) of the other lens (H) facing air has a spherical or a toric design and whose refractive index is different to that of the progressive spectacle lens (P).

10. A spectacle lens according to claim 9, characterised by the fact that the progressive spectacle lens has practically no optical power in the area of the distance portion (3,6) and the desired optical power (prescription value) in the distance portion (3,6) is obtained by means of the second lens (H) affixed to the back surface (2) of the progressive spectacle lens (P).

## Revendications

1. Verre de lunettes progressif à une face avant convexe asphérique (1) et une face intérieure concave asphérique (2), dont au moins une face contribue à une augmentation de la puissance de la plage de vision lointaine (3) par la plage progressive (4) vers la plage de vision rapprochée (5), caractérisé en ce que la face (1) contribuante à l'augmentation de la puissance, ou les faces, est si formée que le gros de l'astigmatisme soit décentré dans une plage (3 ou 5) dans laquelle la puissance pratiquement ne croît pas, et en ce que l'astigmatisme zonal desdites deux faces (1, 2) est essentiellement compensé dans ces deux plages (3, 6 ou 5, 8).

2. Verre de lunettes selon la Revendication 1, caractérisé en ce que seulement une face (1) contribue à l'augmentation de la puissance.

3. Verre de lunettes selon quelconque des Revendications 1 à 2, caractérisé en ce que la zone dans laquelle l'astigmatisme zonal est décentré est la plage de vision lointaine (3).

4. Verre de lunettes selon quelconque des Revendications 1 à 3, caractérisé en ce que la face (2) qui ne contribue pas à l'augmentation de la puissance comprend une zone de transition continue (7) entre la zone (6) dans laquelle l'astigmatisme est décentré, et les autres parties de la surface (8).

5. Verre de lunettes selon quelconque des Revendications 1 à 3, caractérisé en ce que la transition de la zone (6) de la face (2) qui ne contribue pas à l'augmentation de la puissance, dans laquelle l'astigmatisme est décentré, est discontinue relativement aux autres parties de la surface (8).

6. Verre de lunettes selon quelconque des Revendications 1 à 5, caractérisé en ce que la face (2) qui ne contribue pas à l'augmentation de la puissance, à l'exception de la zone (6) appartenante à la plage de vision lointaine (3) et d'une zone de transition (7) suivante, est d'une formation sphérique ou torique.

7. Verre de lunettes selon quelconque des Revendications 1 à 6, caractérisé en ce qu'au moins une des deux faces (1,2) satisfait l'équation suivante dans un système de coordonnées cylindriques (y, ρ, φ):

$$\rho(\varphi, y) = \sum_{n=0}^{\infty} a_n(y) * \cos(n\, k(y)\varphi)$$

dans laquelle les valeurs $a_n(y)$ sont si choisies que $\varphi(o,y)$ décrive la courbe f(y) du méridien principal,
k(y) soit une fonction croissante monotonement de la plage de vision rapprochée (5) à la plage de vision lointaine (3) — préférablement dans une gamme de 3 à 10 — ou un nombre constant sur toute la surface — préférablement dans une gamme de 3 à 10, et en ce que la loi de la courbure F(y) = f'' (y)/(1 + f'^2(y))^{3/2} du méridien principal suit l'équation suivante:

$$F(y) = A (1-(1 + e^{-c(y + d)})-m$$

dans laquelle A = $\overline{D}_N$-$\overline{D}_F$, $\overline{D}_N$ et $\overline{D}_F$ correspondant à la valeur moyenne de la force de réfraction zonale dans la plage de vision rapprochée (5, 8) ou de la plage de vision lointaine (3, 6).

8. Verre de lunettes selon quelconque des Revendications 1 à 6, caractérisé en ce que le verre est pratiquement sans aucun effet optique dans la zone de la plage de vision lointaine (3, 6).

9. Verre de lunettes selon quelconque des Revendications 1 à 8, caractérisé en ce qu'à une face (2) est disposée une lentille additionelle (H) dont la surface (10) adjacente à l'air est sphérique ou torique, et dont l'indice de réfringence est différent de l'indice du verre de lunettes progressif (P).

10. Verre de lunettes selon la Revendication 9, caractérisé en ce que le verre de lunettes progressif est pratiquement sans aucun effet optique dans la zone de la plage de vision lointaine (3,6), et que l'effet optique désiré (valeur dioptrique prescrite) dans la plage de vision lointaine (3,6) est réalisé par la disposition d'une deuxième lentille (H) à la face intérieure (2) du verre de lunettes progressif (P).

**FIG.1**

**FIG.7**

| PFEILHOEHEN | | | | | | | | | RADIEN (HORIZONTAL) | | | | | | | |
|---|---|---|---|---|---|---|---|---|---|---|---|---|---|---|---|---|
| 28 | 24 | 20 | 16 | 12 | 8 | 4 | 0 | X(MM) | 0 | 4 | 8 | 12 | 16 | 20 | 24 | 28 |
| | | | | | | | | Y(MM) | | | | | | | | |
| | 8.754 | 7.282 | 6.112 | 5.264 | 4.712 | 4.424 | 4.333 | 28 | 88 | 79 | 64 | 55 | 55 | 62 | 76 | |
| 9.212 | 7.505 | 6.060 | 4.915 | 4.085 | 3.550 | 3.261 | 3.171 | 24 | 89 | 81 | 66 | 57 | 55 | 62 | 76 | 88 |
| 8.148 | 6.463 | 5.039 | 3.913 | 3.098 | 2.571 | 2.286 | 2.198 | 20 | 90 | 82 | 67 | 58 | 56 | 62 | 75 | 88 |
| 7.292 | 5.623 | 4.214 | 3.102 | 2.237 | 1.776 | 1.494 | 1.406 | 16 | 91 | 83 | 68 | 59 | 57 | 63 | 75 | 89 |
| 6.640 | 4.980 | 3.581 | 2.477 | 1.678 | 1.161 | 0.880 | 0.733 | 12 | 91 | 83 | 69 | 59 | 57 | 62 | 75 | 89 |
| 6.184 | 4.529 | 3.136 | 2.036 | 1.233 | 0.723 | 0.442 | 0.354 | 8 | 91 | 83 | 69 | 59 | 57 | 63 | 75 | 88 |
| 5.914 | 4.263 | 2.874 | 1.777 | 0.981 | 0.462 | 0.178 | 0.089 | 4 | 90 | 82 | 69 | 60 | 58 | 63 | 75 | 87 |
| 5.829 | 4.184 | 2.803 | 1.710 | 0.910 | 0.384 | 0.032 | 0.000 | 0 | 87 | 81 | 69 | 61 | 59 | 64 | 74 | 85 |
| 5.938 | 4.303 | 2.937 | 1.850 | 1.044 | 0.500 | 0.192 | 0.093 | -4 | 81 | 77 | 69 | 63 | 62 | 65 | 73 | 79 |
| 6.259 | 4.636 | 3.288 | 2.209 | 1.332 | 0.825 | 0.492 | 0.383 | -8 | 73 | 72 | 69 | 67 | 66 | 68 | 71 | 73 |
| 6.819 | 5.194 | 3.850 | 2.771 | 1.943 | 1.358 | 1.009 | 0.893 | -12 | 69 | 69 | 69 | 69 | 69 | 69 | 69 | 69 |
| 7.637 | 5.934 | 4.636 | 3.545 | 2.706 | 2.112 | 1.758 | 1.639 | -16 | 68 | 68 | 68 | 69 | 69 | 69 | 68 | 68 |
| 8.723 | 7.057 | 5.676 | 4.568 | 3.716 | 3.113 | 2.753 | 2.633 | -20 | 67 | 67 | 67 | 68 | 68 | 68 | 67 | 67 |
| 10.108 | 8.399 | 6.989 | 5.858 | 4.989 | 4.375 | 4.008 | 3.885 | -24 | 66 | 66 | 66 | 66 | 67 | 66 | 66 | 66 |
| --- - -- | 10.039 | 8.592 | 7.432 | 6.542 | 5.912 | 5.536 | 5.411 | -28 | 64 | 64 | 65 | 65 | 65 | 65 | 64 | |

## FIG.2

EP 0 191 831 B1

FIG.3

FIG.4

## FIG.5

FIG. 6